# NEW EUROPEAN PATENT SPECIFICATION

(11) **EP 2 713 109 B2**
(45) Date of publication and mention of the opposition decision: **08.07.2020**
(45) Mention of the grant of the patent: 31.08.2016
(21) Application number: 12186502.6
(22) Date of filing: 28.09.2012
(51) Int. Cl.: F24C 15/20

(54) **Cooking oven comprising an exhaust closure system**
Abgasverschlusssystem für einen Kochherd
Système de fermeture d'échappement destiné à un four de cuisson

(43) Date of publication of application: 02.04.2014
(73) Proprietor: Electrolux Home Products Corporation N.V., 1130 Brussels (BE)
(72) Inventor: HILDNER, Dietmar, 91541 Rothenburg (DE); KÄSER, Erhard, 91541 Rothenburg ob der Tauber (DE); IVANOVIC, Branko, 91541 Rothenburg (DE)
(74) Representative: Meissner Bolte Partnerschaft mbB

(56) References cited:
- EP-A2- 0 413 501
- EP-A2- 1 426 694
- WO-A1-2012/117378
- GB-A- 2 123 660
- JP-A- 2000 018 589
- JP-A- 2004 093 048
- US-A- 1 678 730
- US-A- 3 051 158
- US-A- 3 196 862
- US-A- 5 500 508

## Description

The present invention relates to a cooking oven comprising an exhaust closure system.

An exhaust system in a cooking oven reduces humidity resulting by the cooking process. Otherwise humidity would cause condensation in the oven cavity. Different cooking modes generate different amounts of humidity in the oven cavity. Thus, the exhaust system should be adapted to the amount of humidity in order to prevent condensation in the oven cavity.

DE 39 31 483 A1 discloses an exhaust closure system for a cooking oven. A vapour pipe is connected to an upper opening in the oven cavity. In order to provide humidity inside the oven cavity, a flap is arranged in the vapour pipe. The exhaust closure system includes a thermal actuator and a pull-spring. However, the exhaust closure system requires a lot of space and is relative complex.

US 3,051,158 discloses a ventilation system for a cooking oven. A vapour pipe is formed as an opening in a top wall of the oven cavity. A plate is shiftable over the opening. One portion of said plate is solid and another portion is formed with an aperture spanned by a filter screen. The plate is affixed to a lever, which fulcrumed about a stud set into partition immediately behind the filter screen. At its distal end the lever has a pin connected to a manipulating button constrained to slide within a horizontal slot in the front of the hood.

It is an object of the present invention to provide a cooking oven with an exhaust closure system, which allows a flat construction by low complexity.

The object of the present invention is achieved by the cooking oven with the exhaust closure system according to claim 1.

According to the present invention the slider is elongated and movable along its longitudinal axis, the exhaust closure system comprises a driving device for moving the slider, and the exhaust closure system comprises at least one guide element for the slider.

The main idea of the present invention is the horizontal flat sheet element covering the vapour pipe, wherein said flat sheet element is movable within the same horizontal plane during opening and closing the vapour pipe. This allows a flat construction of the exhaust closure system. Further, the vapour pipe may be continuously opened and closed, so that different opening widths of the vapour pipe are adjustable. Moreover, the exhaust closure system may comprise at least one guide element for the slider.

According to one embodiment of the present invention the cover element is formed as an end portion of the slider and linearly moveable for opening and closing the vapour pipe. In this case the cover element and the slider may be formed as a single-piece part, which allows a construction by low complexity.

According to another embodiment of the present invention the cover element is pivoting around a vertical axis and connected to the slider via a hinged joint.

In this case, the cover element may be a two-armed lever, wherein a first arm is provided for covering the vapour pipe and a second arm is connected to the slider via the hinged joint, and wherein the first arm has at least the double length of the second arm. A small movement of the slider allows a relative big movement of the arm covering the vapour pipe.

In particular, the exhaust closure system is provided for a cooking oven with a horizontal cooling channel in an upper portion of the oven cavity, wherein the cooling channel is arranged above the vapour pipe, and wherein an upper end of the vapour pipe is connected to the cooling channel.

For example, the cover element is arranged inside the cooling channel.

In a similar way, the guide element is arranged inside the cooling channel.

Further, the slider may be partially arranged inside the cooling channel.

In contrast, the driving device may be arranged outside the cooling channel and outside the oven cavity.

For example, the slider and/or the cover element are made of a shape memory alloy.

Moreover, the driving device may be arranged on a top wall of the oven cavity.

Preferably, the driving device is a motor, an actuator or a shape memory alloy.

Novel and inventive features of the present invention are set forth in the appended claims.

The present invention will be described in further detail with reference to the drawings, in which
- FIG 1: illustrates a perspective view of an exhaust closure system according to a first embodiment of the present invention in an open state,
- FIG 2: illustrates a perspective view of the exhaust closure system according to the first embodiment of the present invention in a closed state,
- FIG 3: illustrates a perspective view of the exhaust closure system according to the first embodiment of the present invention arranged at a top wall of an oven cavity,
- FIG 4: illustrates a perspective view of an exhaust closure system according to a second embodiment of the present invention in the open state,
- FIG 5: illustrates a perspective view of the exhaust closure system according to the second embodiment of the present invention in the closed state,
- FIG 6: illustrates a perspective view of the exhaust closure system according to the second embodiment of the present invention arranged at the top wall of the oven cavity,
- FIG 7: illustrates a detailed sectional side view of the exhaust closure system according to the second embodiment of the present invention,
- FIG 8: illustrates a sectional side view of the exhaust closure system according to the second embodiment of the present invention, and
- FIG 9: illustrates a further sectional side view of the exhaust closure system according to the second embodiment of the present invention.

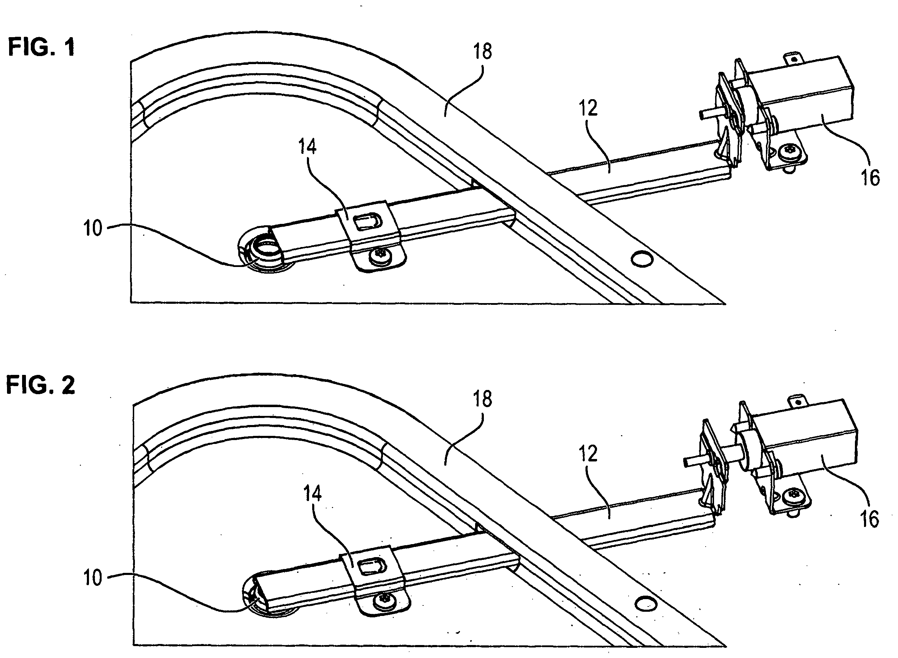

FIG 1 illustrates a perspective view of an exhaust closure system according to a first embodiment of the present invention in an open state

The exhaust closure system is provided for opening and closing a vapour pipe 10. A continuous opening and closing of said vapour pipe 10 is provided. The vapour pipe 10 interconnects an oven cavity and a cooling channel. The cooling channel is arranged above the oven cavity.

The exhaust closure system comprises a slider 12, a guide element 14 and a driving device 16. The cooling channel includes a channel wall 18. The slider 12 is arranged inside and outside the cooling channel. The slider 12 penetrates the channel wall 18. The slider 12 is elongated and lamellar. The slider 12 is flat and extends substantially within a horizontal plane. The slider 12 is movable along its longitudinal axis by the driving device 16. The movement of the slider 12 is guided by the guide element 14. The guide element 14 is arranged inside the cooling channel. The driving device 16 is arranged outside the cooling channel. For example, the driving device 16 is a motor, an actuator or a shape memory allow.

An end portion of the slider 12 inside the cooling channel forms a cover element provided for covering the vapour pipe 10. The vapour pipe 10 may be completely or partially covered by said end portion of the slider 12. Further, the vapour pipe 10 may be completely opened, when the slider 12 is moved to the driving device 16 and said end portion of the slider 12 is besides the vapour pipe 10. In FIG 1 the vapour pipe 10 is almost completely open.

FIG 2 illustrates a perspective view of the exhaust closure system according to the first embodiment of the present invention in the closed state. In FIG 2 the end portion of the slider 12 covers the vapour pipe 10.

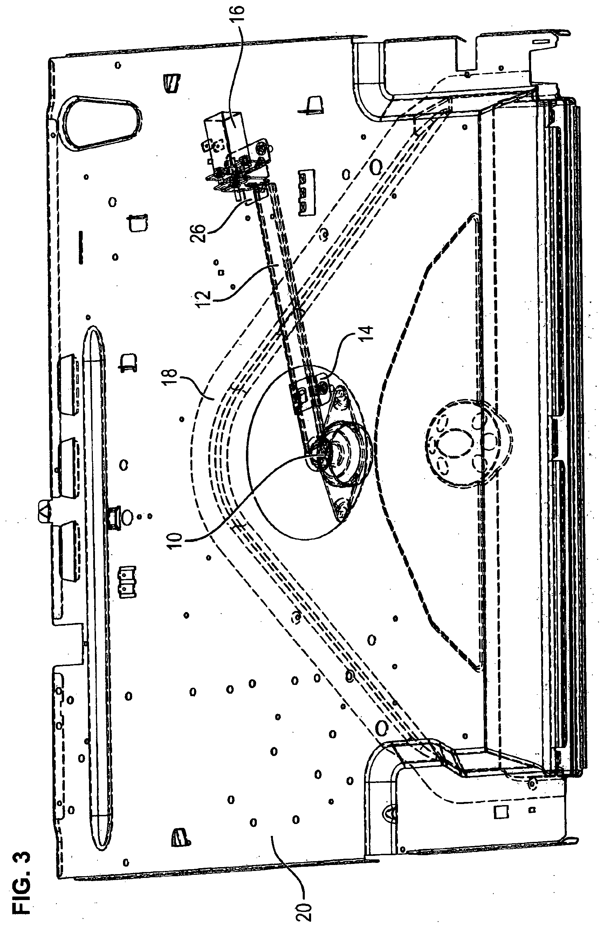

FIG 3 illustrates a perspective view of the exhaust closure system according to the first embodiment of the present invention arranged at a top wall 20 of an oven cavity.

The channel wall 18 is arranged below the top wall 20 of the oven cavity. Thus, the cooling channel is defined by the space between the channel wall 18 and the top wall 20. The guide element 14 is arranged inside the cooling channel. The driving device 16 is arranged above the top wall 20 of the oven cavity. In this example, about the one half of the slider 12 is arranged inside the cooling channel, while the other half of said slider 12 is arranged outside the cooling channel. Further, the slider 12 is arranged below the top wall 20 of the oven cavity. The top wall 20 includes a via hole 26 besides the driving device 16. An interconnecting element between the slider 12 and the driving device 16 penetrates through the via hole 26. Said interconnecting element may be a part of the slider 26.

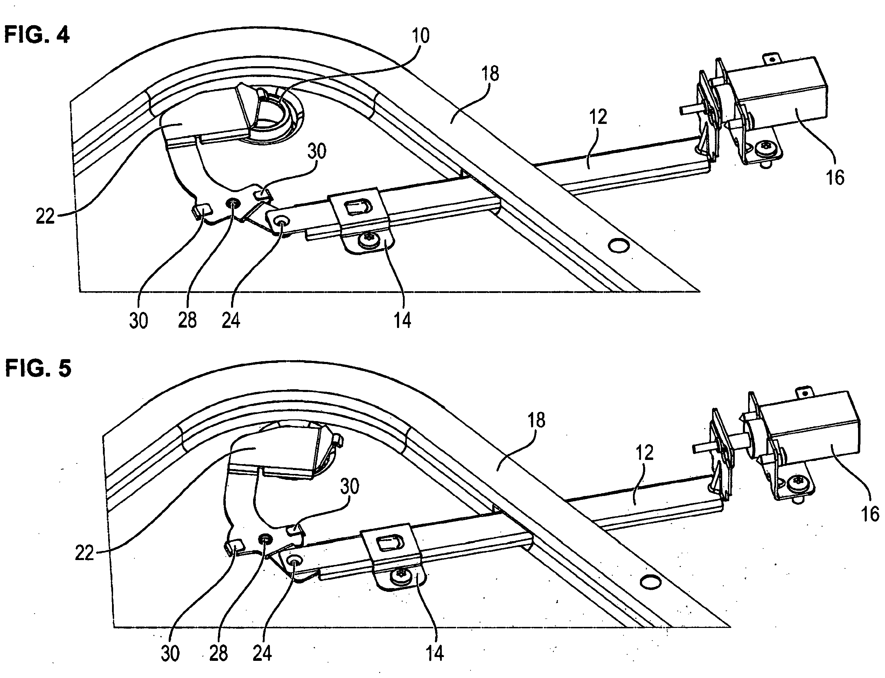

FIG 4 illustrates a perspective view of an exhaust closure system according to a second embodiment of the present invention in the open state.

The exhaust closure system is provided for opening and closing the vapour pipe 10. The said vapour pipe 10 may be continuously opened and closed. The vapour pipe 10 interconnects the oven cavity and the cooling channel. The cooling channel is arranged above the oven cavity.

The exhaust closure system comprises the slider 12, the guide element 14 and the driving device 16. The cooling channel includes the channel wall 18. The slider 12 is arranged inside and outside the cooling channel. The slider 12 penetrates the channel wall 18. The slider 12 is elongated and lamellar. The slider 12 is movable along its longitudinal axis by the driving device 16. The movement of the slider 12 is guided by the guide element 14. The guide element 14 is arranged inside the cooling channel. The driving device 16 is arranged outside the cooling channel. Preferably, the driving device 16 is a motor, an actuator or a shape memory allow.

The exhaust closure system of the second embodiment comprises a flap 22. The flap 22 forms the cover element for the exhaust closure system of the second embodiment. The flap 22 is substantially formed as a horizontal sheet and pivoting at the channel wall 18 around a swivel 28. The pivoting axis of the flap 22 is vertical. One end of the flap 22 is provided for covering the vapour pipe 10. Another end of the flap 22 is connected to the slider 12 via a hinged joint 24. The flap 22 forms a two-armed lever, wherein the one arm is provided for covering the vapour pipe 10 and the other arm is connected to the slider 12 via the hinged joint 24. In this example, the arm for covering the vapour pipe 10 has about the double length of the arm connected to the slider 12. Thus, a small movement of the slider 12 causes a relative big motion of the flap 22. Further, a central portion of the flap 22 is guided between two bending ups 30. Said bending ups 30 are pierced in the channel wall 18 and bent up.

Since the flap 22 is substantially formed as the horizontal sheet and the slider 12 is lamellar, the exhaust closure system is very flat. In FIG 4 the vapour pipe 10 is nearly open.

FIG 5 illustrates a perspective view of the exhaust closure system according to the second embodiment of the present invention in the closed state. In FIG 5 the flap 22 covers the vapour pipe 10.

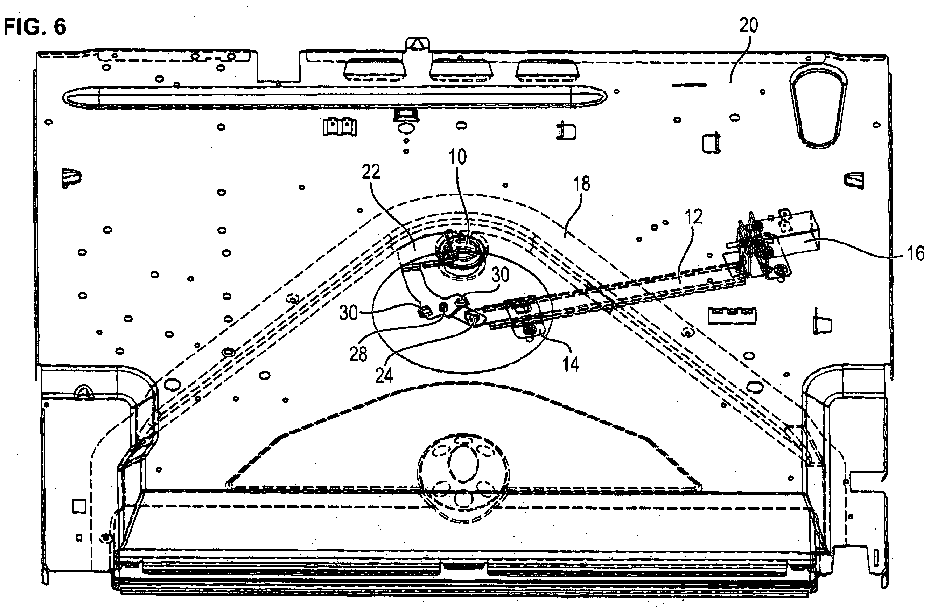

FIG 6 illustrates a perspective view of the exhaust closure system according to the second embodiment of the present invention arranged at the top wall 20 of the oven cavity.

The channel wall 18 is arranged below the top wall 20 of the oven cavity, so that the cooling channel is defined by the space between the channel wall 18 and the top wall 20. The guide element 14 is arranged inside the cooling channel. The driving device 16 is arranged above the top wall 20 of the oven cavity. In this example, about the one half of the slider 12 is arranged inside the cooling channel, while the other half of said slider 12 is arranged outside the cooling channel. Further, the slider 12 is arranged below the top wall 20 of the oven cavity. The top wall 20 includes a via hole 26 besides the driving device 16. An interconnecting element between the slider 12 and the driving device 16 penetrates through the via hole 26. Said interconnecting element may be a part of the slider 26. The flap 22 is also arranged inside the cooling channel.

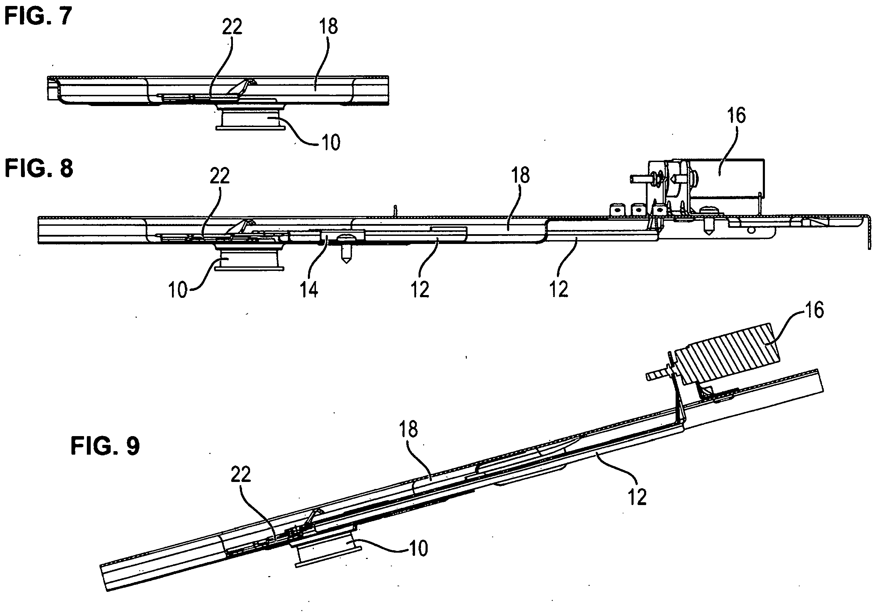

FIG 7 illustrates a detailed sectional side view of the exhaust closure system according to the second embodiment of the present invention. FIG 7 clarifies the flat structure of the flap 22.

FIG 8 illustrates a sectional side view of the exhaust closure system according to the second embodiment of the present invention.

FIG 9 illustrates a further sectional side view of the exhaust closure system according to the second embodiment of the present invention. FIG 8 and FIG 9 clarify the flat structure of the flap 22, the slider 12 and the cooling channel.

In the exhaust closure system of the second embodiment a relative small motion of the slider 12 is sufficient for opening and closing the vapour pipe 10.

Although two illustrative embodiments of the present invention have been described herein with reference to the accompanying drawings, it is to be understood that the present invention is not limited to these precise embodiments, and that various other changes and modifications may be affected therein by one skilled in the art. All such changes and modifications are intended to be included within the scope of the invention as defined by the appended claims.

### List of reference numerals

- 10: vapour pipe
- 12: slider
- 14: guide element
- 16: driving device
- 18: channel wall
- 20: top wall
- 22: flap
- 24: hinged joint
- 26: via hole
- 28: swivel
- 30: bending up

## Claims

1. A cooking oven with a vertical vapour pipe (10) in an upper portion of the oven cavity, wherein
- a lower end of the vapour pipe (10) is connected to the oven cavity,
- the cooking oven includes an exhaust closure system,
- the exhaust closure system comprises a slider (12),
- the slider (12) is provided for a horizontal arrangement within the plane above the vapour pipe (10),
- the exhaust closure system comprises an cover element (12; 22) for covering the vapour pipe (10), and
- the cover element (12; 22) is a horizontal sheet element and moveable within a horizontal plane for opening and closing the vapour pipe (10),
**characterized in that**
the slider (12) is elongated and movable along its longitudinal axis, the exhaust closure system comprises a driving device (16) for moving the slider (12), and the exhaust closure system comprises at least one guide element (14) for the slider (12).

2. The cooking oven according to claim 1,
**characterized in that**
the cover element is formed as an end portion of the slider (12) and linearly moveable for opening and closing the vapour pipe (10).

3. The cooking oven according to claim 1,
**characterized in that**
the cover element (22) is pivoting around a vertical axis (28) and connected to the slider (12) via a hinged joint (24).

4. The cooking oven according to claim 3,
**characterized in that**
the cover element (22) is a two-armed lever, wherein a first arm is provided for covering the vapour pipe (10) and a second arm is connected to the slider (12) via the hinged joint (24), and wherein the first arm has at least the double length of the second arm.

5. The cooking oven according to any one of the preceding claims,
**characterized in that**
the cooking oven includes a horizontal cooling channel in an upper portion of the oven cavity, wherein the cooling channel is arranged above the vapour pipe (10), and wherein an upper end of the vapour pipe (10) is connected to said cooling channel.

6. The cooking oven according to claim 5,
**characterized in that**
the cover element (12; 22) is arranged inside the cooling channel.

7. The cooking oven according to claim 5 or 6,
**characterized in that**
the guide element (14) is arranged inside the cooling channel.

8. The cooking oven according to any one of the claims 5 to 7,
**characterized in that**
the slider (12) is partially arranged inside the cooling channel.

9. The cooking oven according to any one of the claims 5 to 10,
**characterized in that**
the driving device (16) is arranged outside the cooling channel and outside the oven cavity.

10. The cooking oven according to any one of the preceding claims,
**characterized in that**
the slider (12) and/or the cover element (12; 22) are made of a shape memory alloy.

11. The cooking oven according to any one of the preceding claims,
**characterized in that**
the driving device (16) is arranged on a top wall (20) of the oven cavity.

12. The cooking oven according to any one of the preceding claims,
**characterized in that**
the driving device (16) is a motor, an actuator or a shape memory alloy.

## Patentansprüche

1. Garofen mit einem vertikalen Dunstrohr (10) in einem oberen Abschnitt des Garraums, wobei
- ein unteres Ende des Dunstrohrs (10) mit dem Garraum verbunden ist,
- der Garofen ein Abzugsverschlusssystem aufweist,
- das Abzugsverschlusssystem einen Schieber (12) umfasst,
- der Schieber (12) für eine horizontale Anordnung in der Ebene oberhalb des Dunstrohrs (10) vorgesehen ist,
- das Abzugsverschlusssystem ein Abdeckungselement (12; 22) zum Abdecken des Dunstrohrs (10) umfasst und
- das Abdeckungselement (12; 22) ein horizontales Flächengebildeelement ist, das in der horizontalen Ebene beweglich ist, um das Dunstrohr (10) zu öffnen und zu schließen,
**dadurch gekennzeichnet, dass**
der Schieber (12) länglich und entlang seiner Längsachse beweglich ist, das Abzugsverschlusssystem eine Treibvorrichtung (16) zum Bewegen des Schiebers (12) umfasst und das Abzugsverschlusssystem mindestens ein Führungselement (14) für den Schieber (12) umfasst.

2. Garofen nach Anspruch 1,
**dadurch gekennzeichnet, dass**
das Abdeckungselement als ein Endabschnitt des Schiebers (12) gebildet und linear beweglich ist, um das Dunstrohr (10) zu öffnen und zu schließen.

3. Garofen nach Anspruch 1,
**dadurch gekennzeichnet, dass**
das Abdeckungselement (22) um eine vertikale Achse (28) schwenkt und über ein Scharniergelenk (24) mit dem Schieber (12) verbunden ist.

4. Garofen nach Anspruch 3,
**dadurch gekennzeichnet, dass**
das Abdeckungselement (22) ein zweiarmiger Hebel ist, wobei ein erster Arm zum Abdecken des Dunstrohrs (10) vorgesehen ist und ein zweiter Arm über das Scharniergelenk (24) mit dem Schieber (12) verbunden ist und wobei der erste Arm mindestens doppelt so lang wie der zweite Arm ist.

5. Garofen nach einem der vorhergehenden Ansprüche,
**dadurch gekennzeichnet, dass**
der Garofen einen horizontalen Kühlkanal in einem oberen Abschnitt des Garraums aufweist, wobei der Kühlkanal über dem Dunstrohr (10) angeordnet ist und wobei ein oberes Ende des Dunstrohrs (10) mit dem Kühlkanal verbunden ist.

6. Garofen nach Anspruch 5,
**dadurch gekennzeichnet, dass**
das Abdeckungselement (12; 22) in dem Kühlkanal angeordnet ist.

7. Garofen nach Anspruch 5 oder 6,
**dadurch gekennzeichnet, dass**
das Führungselement (14) in dem Kühlkanal angeordnet ist.

8. Garofen nach einem der Ansprüche 5 bis 7,
**dadurch gekennzeichnet, dass**
der Schieber (12) teilweise in dem Kühlkanal angeordnet ist.

9. Garofen nach einem der Ansprüche 5 bis 10,
**dadurch gekennzeichnet, dass**
die Treibvorrichtung (16) außerhalb des Kühlkanals und außerhalb des Garraums angeordnet ist.

10. Garofen nach einem der vorhergehenden Ansprüche,
**dadurch gekennzeichnet, dass**
der Schieber (12) und/oder das Abdeckungselement (12; 22) aus einer Formgedächtnislegierung hergestellt sind.

11. Garofen nach einem der vorhergehenden Ansprüche,
**dadurch gekennzeichnet, dass**
die Treibvorrichtung (16) an einer oberen Wand (20) des Garraums angeordnet ist.

12. Garofen nach einem der vorhergehenden Ansprüche,
**dadurch gekennzeichnet, dass**
die Treibvorrichtung (16) ein Motor, ein Aktuator oder eine Formgedächtnislegierung ist.

## Revendications

1. Four de cuisson avec un tuyau à vapeur vertical (10) dans une partie supérieure de la cavité du four, dans lequel
- une extrémité inférieure du tuyau à vapeur (10) est reliée à la cavité du four,
- le four de cuisson comporte un système de fermeture d'échappement,
- le système de fermeture d'échappement comprend une glissière (12),
- la glissière (12) est disposée pour un agencement horizontal dans le plan au-dessus du tuyau à vapeur (10),
- le système de fermeture d'échappement comprend un élément de couverture (12 ; 22) servant à recouvrir le tuyau à vapeur (10), et
- l'élément de couverture (12 ; 22) est un élément en feuille horizontal et mobile dans un plan horizontal pour ouvrir et fermer le tuyau à vapeur (10),
**caractérisé en ce que**
la glissière (12) est allongée et mobile le long de son axe longitudinal, le système de fermeture d'échappement comprend un dispositif d'entraînement (16) servant à déplacer la glissière (12), et le système de fermeture d'échappement comprend au moins un élément de guidage (14) pour la glissière (12).

2. Four de cuisson selon la revendication 1,
**caractérisé en ce que**
l'élément de couverture est formé comme une partie d'extrémité de la glissière (12) et mobile linéairement pour ouvrir et fermer le tuyau à vapeur (10).

3. Four de cuisson selon la revendication 1,
**caractérisé en ce que**
l'élément de couverture (22) est pivotant autour d'un axe vertical (28) et relié à la glissière (12) par une articulation à charnière (24).

4. Four de cuisson selon la revendication 3,
**caractérisé en ce que**
l'élément de couverture (22) est un levier à deux bras, un premier bras étant disposé pour recouvrir le tuyau à vapeur (10) et un deuxième bras étant relié à la glissière (12) par l'articulation à charnière (24), et le premier bras ayant une longueur au moins double de celle du deuxième bras.

5. Four de cuisson selon l'une quelconque des revendications précédentes,
**caractérisé en ce que**
le four de cuisson comporte un canal de refroidissement horizontal dans une partie supérieure de la cavité du four, le canal de refroidissement étant disposé au-dessus du tuyau à vapeur (10), et une extrémité supérieure du tuyau à vapeur (10) étant reliée audit canal de refroidissement.

6. Four de cuisson selon la revendication 5,
**caractérisé en ce que**
l'élément de couverture (12 ; 22) est disposé à l'intérieur du canal de refroidissement.

7. Four de cuisson selon la revendication 5 ou 6,
**caractérisé en ce que**
l'élément de guidage (14) est disposé à l'intérieur du canal de refroidissement.

8. Four de cuisson selon l'une quelconque des revendications 5 à 7,
**caractérisé en ce que**
la glissière (12) est disposée partiellement à l'intérieur du canal de refroidissement.

9. Four de cuisson selon l'une quelconque des revendications 5 à 10,
**caractérisé en ce que**
le dispositif d'entraînement (16) est disposé à l'extérieur du canal de refroidissement et à l'extérieur de la cavité du four.

10. Four de cuisson selon l'une quelconque des revendications précédentes,
**caractérisé en ce que**
la glissière (12) et/ou l'élément de couverture (12 ; 22) sont constitués d'un alliage à mémoire de forme.

11. Four de cuisson selon l'une quelconque des revendications précédentes,
**caractérisé en ce que**
le dispositif d'entraînement (16) est disposé sur une paroi supérieure (20) de la cavité du four.

12. Four de cuisson selon l'une quelconque des revendications précédentes,
**caractérisé en ce que**
le dispositif d'entraînement (16) est un moteur, un actionneur ou un alliage à mémoire de forme.
